# EUROPEAN PATENT APPLICATION

(11) **EP 2 246 719 A2**
(43) Date of publication of application: **03.11.2010**
(21) Application number: 10004528.5
(22) Date of filing: 29.04.2010
(51) Int. Cl.: G02B 6/44

(54) **Optical cable and arrangement for producing an optical cable**

(30) Priority: 30.04.2009 DE 202009006357 U
(71) Applicant: CCS Technology, Inc., Wilmington, DE 19803 (US)
(72) Inventor: Müller, Thomas, 96515 Sonneberg (DE); Förtsch, Johann, 96317 Kronach (DE)
(74) Representative: Epping - Hermann - Fischer

(57) **Abstract**

An optical cable comprises a plurality of stranded optical transmission elements (10). The optical transmission elements are stranded in a first stranding direction (U1) at a first section (B1) of the cable and are stranded in a second stranding direction (U2) at a second section (B2) of the cable located adjacent relating to the first section. The cable comprises a sheath (200) surrounding the optical transmission elements (10) having a marking (300) disposed at a surface (201) of the sheath at a position (SH) between the first and second section of the cable. A stranding device (1000) to switch between the stranding directions and a marking device (3000) to dispose a marking on a tape formed to the sheath (200) by a sheath forming device (2000) is provided to produce the optical cable.

## Description

Optical cable and arrangement for producing an optical cable

An embodiment of an optical cable in which a cable core comprises stranded optical transmission elements is specified. Furthermore, an arrangement for producing such an optical cable is specified.

In a possible embodiment, an optical cable comprises optical transmission elements which are intended for the transmission of light over relatively great distances. Each of the optical transmission elements may contain a number of optical waveguides, which are surrounded by a buffer tube. A number of these optical transmission elements may be arranged in a stranded manner in the cable core of the optical cable.

The stranded arrangement of the optical transmission elements gives the optical cable great flexibility. In the case of SZ stranding, the optical transmission elements are stranded in the longitudinal direction of the cable core initially with a number of revolutions in one direction of rotation and subsequently stranded in the longitudinal direction of the cable with a number of revolutions in the opposite direction. Consequently, the optical transmission elements are arranged alternately in an S stranded form and a Z stranded form on adjacent portions of the cable core. To fix the stranding, the optical transmission elements are held together by a holding helix.

As a result of the stranding, the optical transmission elements have an excess length with respect to the length of the cable. The excess length is used to splice the optical waveguides of the optical transmission elements with further optical waveguides, in particular at a reversal position, at which the stranding direction changes from the S stranded form to the Z stranded form. For this purpose, the holding helix is removed at a reversal position.

It is often necessary to provide an already laid optical cable with branching nodes, at which the optical waveguides of the optical cable branch in different directions. For protection, the cable core of an optical cable may be surrounded by an outer cable jacket, with the result that the reversal points cannot be directly located by viewing the cable from the outside. If branching of the optical transmission elements by splicing optical waveguides of the optical cable with further optical waveguides is retroactively performed in the case of an optical cable with a cable jacket, the cable jacket must be removed at a reversal position of the stranding direction of the optical transmission elements. If, for example, the optical cable has reversal positions at intervals of 50 cm, in the worst case the cable jacket has to be removed over the entire 50 cm portion of the cable in order to find the reversal position.

In a region around the reversal position, the holding helix that holds the optical transmission elements together is removed. On account of the excess length, the optical waveguides contained in the buffer tubes of the optical transmission elements can be easily placed into a splicing device and spliced with further optical waveguides.

It is desirable to specify an optical cable in which a reversal position at which the stranding direction changes can be easily established. Furthermore, it is desirable to specify an arrangement for producing an optical cable in which a reversal position at which the stranding direction of the optical transmission elements changes can be easily established.

An embodiment of an optical cable comprises a number of stranded optical transmission elements which contain at least one optical waveguide. The optical transmission elements are arranged in a stranded manner such that the optical transmission elements are stranded in a first direction of rotation on a first portion of the cable and are stranded in a second direction of rotation, which is different from the first direction of rotation, on a second portion of the cable, arranged adjacent to the first portion. The cable also has a sheath, surrounding the optical transmission elements, with a marking arranged on a surface of the sheath to identify a position between the first portion and the second portion of the cable. The marking is designed in such a way that the marking is distinguishable from a region of the sheath surrounding the marking.

According to a further embodiment, the sheath surrounds the optical transmission elements in such a way that the marking on the surface of the sheath is arranged between the first portion and the second portion of the cable. According to a further embodiment, the optical transmission elements are arranged in a stranded manner such that a change between the first direction of rotation and the second direction of rotation takes place at a position between the first portion and the second portion of the cable. To identify the position on the surface of the sheath, the marking is arranged at the position of the sheath at which the sheath surrounds the position.

According to a further embodiment, the marking is designed in such a way that the position identified by the marking on the surface of the sheath is detectable. According to a further embodiment, the material of the marking is distinguishable from a material of a region of the sheath surrounding the marking.

The marking may be arranged on a side of the surface of the sheath that is facing the optical transmission elements. The marking may be arranged circumferentially around the optical transmission elements on the side of the surface of the sheath that is facing the optical transmission elements. According to a further embodiment of the optical cable, the marking may be formed as a component which is arranged on the surface of the sheath by an adhesive connection. The marking may be formed as a metal strip. The marking may, for example, contain aluminium or a magnetic material. According to a further embodiment, the marking may be formed as a transponder.

The sheath may contain a dielectric material or a material composed of polyester or a material composed of paper. The sheath may, for example, contain a material which brings about an increase in volume of the sheath on contact with water. According to a further embodiment of the optical cable, the sheath may be surrounded by a filament or yarn. Furthermore, the sheath may be surrounded by a cable jacket. The marking is designed in such a way that the position identified by the marking is detectable through the cable jacket.

According to a further embodiment of the optical cable, the optical transmission elements may be surrounded by a holding element. The optical transmission elements may be arranged in a stranded manner around a central element. The optical transmission elements may, for example, be arranged in an SZ stranding pattern. According to a further embodiment of the optical cable, an armouring of a metallic material is arranged between the sheath and the cable jacket. It is also possible, for example, for yarns of aramid or glass to be arranged between the sheath and the cable jacket.

An arrangement for producing an optical cable according to one of the embodiments given above is specified below. The arrangement comprises a stranding device for stranding the optical transmission elements of the optical cable. The stranding device is formed in such a way that the optical transmission elements are arranged such that they are stranded in a first direction of rotation on a first portion of the optical cable and are stranded in a second direction of rotation, which is different from the first direction of rotation, on a second portion of the optical cable, which is arranged adjacent to the first portion. A switching over of the stranding device between the first direction of rotation and the second direction of rotation is controlled by a control signal. The arrangement has, furthermore, an identification device for applying a marking to a tape to identify a position between the first portion and the second portion of the cable. The application of the marking is controlled by the control signal. Furthermore, the arrangement comprises a sheath forming device for forming the tape into a sheath around the optical transmission elements of the optical cable in such a way that the marking is arranged between the first portion and the second portion of the cable.

According to a further embodiment of the arrangement, the stranding device and the identification device are respectively arranged at a distance from the sheath forming device, so that the marking is arranged between the first portion and the second portion of the optical cable after the sheath has been formed around the cable core. Furthermore, a transporting speed with which the optical transmission elements are fed to the sheath forming device from the stranding device, and a transporting speed with which the tape is fed to the sheath forming device from the identification device are chosen in such a way that the marking on the surface of the sheath is arranged between the first portion and the second portion of the cable. In the case of a further embodiment of the arrangement, the optical transmission elements are stranded by the stranding device in such a way that a change between the first direction of rotation and the second direction of rotation takes place at a position between the first portion and the second portion of the cable. The marking is arranged by the identification device on the surface of the tape at a position at which the tape formed into a sheath surrounds the position. For example, the marking is arranged on the tape at an interval which corresponds to the length of one of the first and second portions of the cable. The marking may, for example, be adhesively attached on the tape when the identification device is activated by the control signal. A material which contains a metal may be arranged on the tape by the identification device. Furthermore, a transponder may be arranged on the tape by the identification device.

The sheath forming device may be formed in such a way that, after the sheath has been formed around the optical transmission elements, the marking is arranged on a surface of the sheath that is facing the optical transmission elements. Furthermore, the arrangement comprises an extruding device for surrounding the sheath with a cable jacket. According to a further embodiment, the arrangement may comprise a detecting unit for detecting the marking, an armouring winding device for arranging the armouring over the sheath and a printing device for applying an identification to the cable jacket of the optical cable. The detecting unit is arranged between the sheath forming device and the armouring winding device and the armouring winding device is arranged between the detecting unit and the printing unit. The printing unit arranges the identification on the cable jacket when the detecting unit detects the marking.

A method for producing an optical cable is specified below. According to the method, a number of optical transmission elements which contain at least one optical waveguide are provided. The optical transmission elements are stranded along a first portion of the optical cable in a first direction of rotation and are stranded along a second portion of the optical cable, arranged adjacent to the first portion, in a second direction of rotation, which is different from the first direction of rotation, wherein switching over between the stranding in the first direction of rotation and the second direction of rotation takes place by activating a stranding device with a control signal. A marking is applied to the surface of the tape by activating an identification device for arranging the marking with the control signal. The marking is designed in such a way that the marking is distinguishable from a region of the tape surrounding the marking. The tape is formed into a sheath. The optical transmission elements are surrounded by the sheath in such a way that the marking is arranged between the first portion and the second portion of the optical cable.

According to a further embodiment, the marking is arranged on the tape when the stranding device is activated with the control signal. The marking may, for example, be arranged on the tape by adhesively attaching a material that is different from the material of the tape onto the tape. For example, a material which contains a metal may be arranged on the tape. For example, a transponder may be arranged as the marking on the tape.

According to a further embodiment of the production method, the optical transmission elements are surrounded by the sheath in such a way that the marking is arranged on a surface of the sheath that is facing the optical transmission elements.

According to a further embodiment of the production method, the sheath is surrounded by a cable jacket. In the case of a further embodiment of the production method, it is provided that first the detection of the marking is carried out, then the surrounding of the sheath with an armouring and subsequently the application of a marking to the cable jacket, when the marking has been detected.

Embodiments of an optical cable and an arrangement for producing the optical cable are explained on the basis of the following figures. Furthermore, a method for producing such an optical cable is specified on the basis of the figures, in which:
Figure 1 shows an embodiment of an arrangement for producing a cable core of an optical cable,
Figure 2 shows an embodiment of a jacketing line for producing an optical cable with a cable core surrounded by a cable jacket,
Figure 3 shows a further embodiment of a jacketing line for producing an optical cable with a cable core surrounded by a cable jacket,
Figure 4 shows an embodiment of an optical transmission element,
Figure 5 shows an embodiment of a cable core with stranded optical transmission elements,
Figure 6 shows optical transmission elements after removal of a holding helix at a reversal position,
Figure 7 shows an embodiment of a tape for applying a sheath around a cable core of the optical cable,
Figure 8 shows an embodiment of an optical cable with a marking to identify a reversal position of the stranding direction of optical transmission elements.

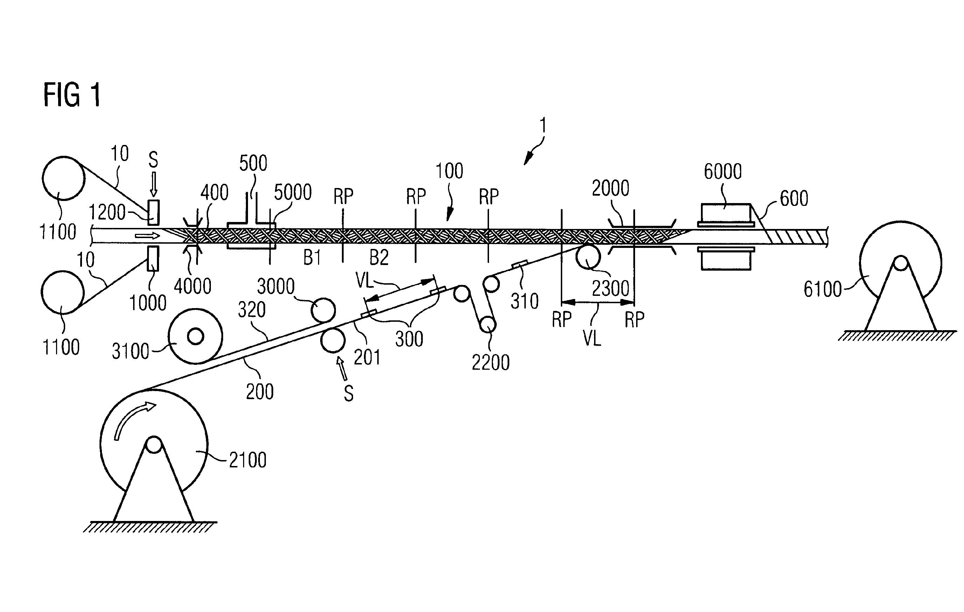

Figure 1 shows an embodiment of an arrangement 1 for producing a cable core 100 of an optical cable. The cable core comprises optical transmission elements 10, which are arranged in a stranded manner in the longitudinal direction of the cable. To produce the cable, first a reinforcing element 20 is provided. The reinforcing element 20 comprises, for example, a material composed of a glass fibre reinforced plastic. The reinforcing element 20 serves for strengthening the cable structure and may, for example, be provided as a central element in the cable core. The optical transmission elements may be arranged in a stranded manner around the reinforcing element 20.

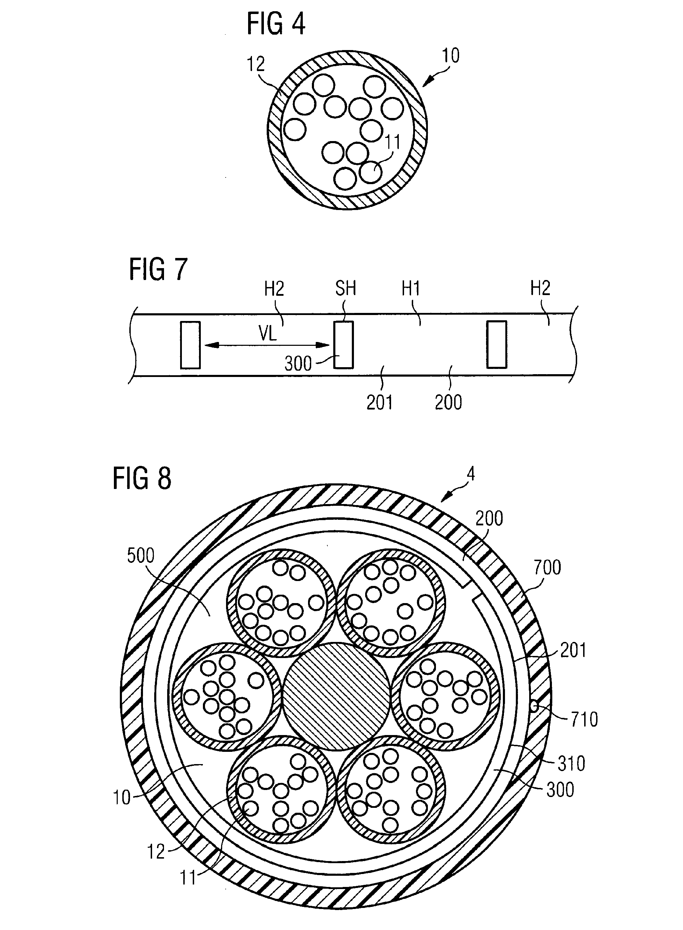

The optical transmission elements 10 are provided for stranding by being arranged on storage devices 1100. In the case of the arrangement shown in Figure 1, the storage devices are formed as drums on which the optical transmission elements are wound up. Figure 4 shows a possible embodiment of an optical transmission element 10. The optical transmission element 10 comprises a buffer tube 12, which contains one or more optical waveguides 11. The optical waveguides 11 comprise a light-guiding core, which is surrounded by a coating. In the case of the arrangement shown in Figure 1, for example, an optical transmission element is selectively wound up on each of the drums 1100. The optical transmission elements are distinguishable from the coating 12, for example in colour. The optical transmission elements are guided from the drums 1100 to a stranding device 1000.

The stranding device 1000 may, for example, comprise an annular disc 1200. By means of a hole in the interior of the annular disc, the outer ring of the disc may be arranged around the reinforcing element 20. The reinforcing element 20 is led through the hollow of the annular disc. The outer ring 1200 of the disc contains openings for guiding the optical transmission elements 10. Each of the optical transmission elements is led through one of the openings.

During rotation of the stranding device 1000, the optical transmission elements 10 are arranged in a stranded manner around the reinforcing element 20 when the reinforcing element is moved through the annular disc in the direction of the arrow. To control the rotation of the annular disc, the stranding device is activated by a control signal S. In dependence on the control signal S, the direction of rotation of the disc 1200 changes. With the stranding device shown in Figure 1, the optical transmission elements 10 can, for example, be arranged around the reinforcing element 20 in an SZ stranding pattern.

To create the SZ stranding pattern, the stranding device rotates for a number of revolutions, for example for three revolutions, in one direction, until the direction of rotation is changed by activation of the stranding device with the control signal S. After activation of the stranding device 1000 with the control signal S, the annular disc 1200 of the stranding device rotates for several revolutions in the opposite direction, until the direction of rotation is once again changed by activation of the stranding device with the control signal S. Consequently, reversal positions at which the stranding direction of the optical transmission elements on the cable core changes are produced at certain intervals, for example at intervals of between 0.4 and 0.6 m. In the case of the embodiment of the production line for producing the cable core that is shown in Figure 1, the optical transmission elements 10 are arranged such that they are stranded in a direction of rotation to the right on the portions B1 of the cable and stranded in a direction of rotation to the left on the portions B2 of the cable, arranged adjacent thereto. At the reversal positions identified by RP, the stranding direction respectively changes.

To fix the stranding, the holding-helix winding device 4000 is provided. By means of the holding-helix winding device 4000, a holding helix 400, for example a filament or a yarn, is wound around the stranded optical transmission elements. In the case of the arrangement for producing the optical cable that is shown in Figure 1, at least two yarns are arranged around the optical transmission elements in a cross-wound fashion. The cross holding helix 400 serves for fixing the stranding of the optical transmission elements 10 around the reinforcing element 20.

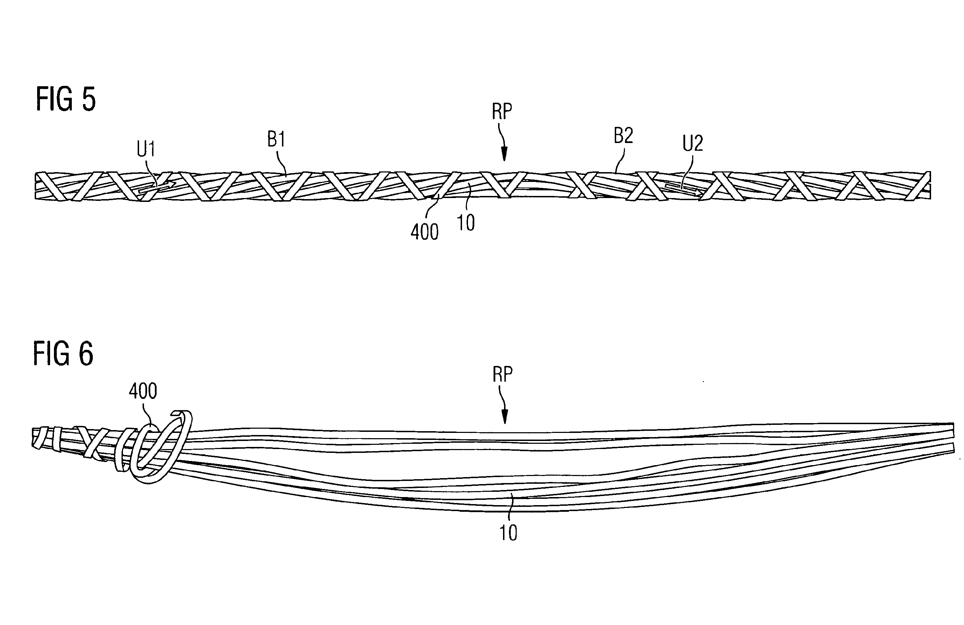

Figure 5 shows adjacently arranged portions B1, B2 of the cable after application of the cross holding helix 400. A number of optical transmission elements 10 are arranged in the SZ stranding pattern. Along the portion B1 of the cable, the optical transmission elements are arranged such that they are stranded in a direction of rotation U1 to the left in the longitudinal direction around a reinforcing element 20 that is not shown in Figure 5. At the position RP, the direction of rotation changes, so that the optical transmission elements 10 in the region B2, which is adjacent to the region B1, are arranged such that they are stranded in a direction of rotation U2 to the right around the reinforcing element. The cross holding helix 400 serves for fixing the SZ stranding pattern.

Figure 6 shows the optical transmission elements 10 after removal of the holding helix 400 at the reversal position RP. On account of the excess length, a sagging of the optical transmission elements 10 occurs after removal of the cross holding helix. The excess length may be used for the purpose of removing the optical waveguides from the optical transmission elements and splicing them with further optical waveguides. In particular, the excess length makes it possible for the optical waveguides to be easily placed in a splicing device for splicing with further optical waveguides.

The cable core 100 may be further processed without any filler or be surrounded by a filling composition 100 in the production arrangement. The filling composition serves for protecting the optical transmission elements 10 from mechanical damage and can additionally prevent the ingress of water into the cable core. In order for the optical transmission elements 10 to be surrounded by the filling composition 500, a filling device 5000 is provided downstream of the holding-helix winding device 4000. The optical transmission elements are surrounded by the filling composition 500 by the filling device 5000. Polyolefin-based greases may be used, for example, as the filling composition.

The cable core 100 is surrounded by a sheath 200. The sheath 200 is first provided on a storage device 2100 in the form of a narrow tape. The storage device 2100 may be a drum, on which the sheath 200 is wound up to form an elongated tape. The sheath 200 may, for example, contain a dielectric material. It may, for example, also comprise a material composed of a plastic, for example of polyester, or composed of paper. The sheath 200 may be provided as a thin film of plastic with a smooth surface or as a nonwoven with a porous surface on the storage drum 2100.

In a sheath forming device 2000, the tape is formed into a sheath and arranged circumferentially around the cable core 100. The tape 200 may, for example, have a width which corresponds to the circumference of the cable core. The tape may also be slightly wider than the circumference of the cable core, for example wider by 2 mm to 4 mm than the circumference of the cable core. If the tape is wider than the circumference of the cable core, after it has been formed into a sheath the tape surrounds the cable core completely, or the edges of the tape overlap by the width of the tape that goes beyond the circumference of the cable core. If the tape has a width which is greater than the circumference of the cable core, it is ensured that, in the event of shrinkage of the tape as a result of tensile loading or as a result of a temperature change, the cable core is nevertheless completely surrounded by the sheath 200.

After the nonwoven or the film has been formed into a sheath, the sheath serves for protecting the cable core from high temperatures, which occur for example during an extrusion operation when extruding a cable jacket. The tape 200 may be coated on one or both sides with a SAP (Super Absorbent Polymer) powder. If the SAP powder comes into contact with moisture, the material swells and consequently brings about an increase in volume of the sheath. As a result, the cable core is protected from the ingress of water.

Provided between the tape runout of the tape 200 from the drum 2100 and the sheath forming device 2000 is an identification device 3000. In the case of the embodiment shown in Figure 1, the identification device 3000 is coupled to a storage drum 3100. Arranged as markings on the drum 2100 are, for example, labels on a supporting material 320 in tape form. The labels may, for example, be strips of a metal which comprise a layer of adhesive 310 on their underside. The labels may be applied to the supporting tape by means of the layer of adhesive. According to a possible embodiment, the labels may, for example, be thin metal platelets of aluminium or some other metal. The metal platelets may have a height of between 30 µm and 70 µm. The markings may, for example, be rectangular and have a width of between 5 mm and 20 mm and a length of between 30 mm and 50 mm.

The markings 300 are arranged on the tape 200 by the identification device 3000. The application of the markings takes place by activation of the identification device 3000 with the control signal S, which is also already used for switching over the direction of rotation of the stranding device. When the identification device 3000 is activated with the control signal S, one of the markings, for example one of the aluminium labels, which at first is still applied to the supporting tape 320, is pulled off from the supporting tape 320 and arranged on the tape 200. For the layer of adhesive 310 of the label 300 to be detached as far as possible without leaving any residue, the supporting tape 320 may be coated with Teflon.

Since the same control signal S that also serves as a switching-over signal for changing the direction of rotation of the stranding device is used for controlling the points in time at which the labels are arranged on the tape 200, the application of a marking to the tape 200 takes place synchronously with the changing of the direction of rotation of the annular disc 1200 of the stranding device 1000. Consequently, the markings 300 are arranged on the tape at an interval VL which corresponds to the length of the portion of the cable on which the optical transmission elements are arranged such that they are stranded in one specific direction of rotation.

From the identification device, the tape 200 provided with the markings runs over a compensating element 2200 and a guiding wheel 2300 to the sheath forming device 2000. The compensating element 2200 has various rollers, over which the tape 200 is led. In the case of the arrangement show in Figure 1, the compensating element altogether comprises three rollers, the middle roller being movably arranged. The compensating element makes it possible to compensate for tensile forces on the tape 200, which occur when the tape is unwound from the storage drum 2100 and when the tape is formed into the sheath 200.

In the case of the embodiment of the cable shown in Figure 1, the cable core 100 is surrounded by the tape 200 in such a way that the markings 300 arranged on the surface of the tape are arranged over the reversal positions RP, at which the stranding direction of the optical transmission elements changes. Figure 7 shows the tape 200 after the adhesive attachment of the markings 300 by the identification device 3000. The markings 300 are formed, for example, as thin metal platelets, the length of which is slightly less than the width of the tape. This ensures that the cable core is circumferentially surrounded by the markings 300 virtually completely at the reversal positions when the tape is formed into a sheath. The synchronous activation of the stranding device 1000 and the identification device 3000 with the same control signal S has the effect that markings 300 are arranged on a surface 201 of the tape at positions SH of the tape with the interval VL, which corresponds to the interval between the reversal positions RP of the cable core. Between the markings, the optical transmission elements 10 are stranded in different directions of rotation around the cable core under the portions H1 and H2 of the sheath 200.

In the sheath forming device 2000, the tape is formed into a sheath in such a way that the markings are arranged on a surface 201 on the inner side of the sheath that is facing the cable core 100 and the optical transmission elements 10. The markings are consequently not visible on the outwardly facing surface of the sheath. Since the markings are arranged on the surface 201 of the sheath 200 that is facing the optical transmission elements 10, the markings are protected from becoming detached from the material of the sheath 200 by subsequent method steps, such as for example the extrusion of a cable jacket around the sheath 200.

In order to ensure that the markings 300 are actually arranged over the reversal positions RP after the tape is formed into the sheath 200 around the cable core, the length between the identification device 3000 and the sheath forming device 200 may be adapted to the length between the stranding device 1000 and the sheath forming device 2000. According to a possible embodiment, the length of the distance which the tape 200 passes over between the identification device 3000 and the sheath forming device 2000 corresponds to the length of the distance which the cable core covers between the stranding device 1000 and the sheath forming device 2000. If the cable core 100 with the stranded optical transmission elements 10 and the tape 200 are moved at the same speed, the markings 300 are arranged over the reversal positions RP after the tape has been formed into a sheath and after the sheath has been applied over the cable core.

In the case of the embodiment of the production arrangement 1 shown in Figure 1, the length of the distance which the tape 200 covers between the identification device 3000 and the sheath forming device 2000 may be different from the length of the distance which the cable core 100 passes over between the stranding device 1000 and the sheath forming device 2000. If the length of the distance which the strand 200 covers from the identification device 3000 to the sheath forming device 2000 is, for example, less than the distance which the cable core passes over between the stranding device 1000 and the sheath forming device 2000, the identification device 3000 may indeed be likewise activated by the control signal S to apply the marking 300 to the tape 200, but the application of the marking 300 to the tape 200 may take place with a time delay.

Even if the length of the distance which the tape 200 covers from the identification device 3000 to the sheath forming device 2000 is longer than the distance which the cable core passes over between the stranding device 1000 and the sheath forming device 2000, the identification device 3000 may be controlled by the control signal S to apply the marking 300 to the tape 200. As a result, the marking 300 is arranged on the tape 200 synchronously with the switching over of the direction of rotation of the stranding device 1000. In order to ensure that the reversal position RP on the cable core and the marking 300 on the tape 200 arrive at the sheath forming device at the same time, the transporting speed of the tape 200 may be increased.

By setting the time delay with which the markings are arranged on the tape 200, the transporting speed with which the tape 200 and the cable core 100 are moved, or by matching the length of the distance between the stranding device and the sheath forming device on the one hand and the length of the distance between the identification device and the sheath forming device on the other hand, the markings can be arranged over the reversal positions RP on the tape 200 with an accuracy of +/- 20 mm.

For fixing the tape 200 that has been formed into a sheath and surrounds the cable core, a holding-helix winding device 6000 is provided. By means of the holding-helix winding device 6000, a holding helix 600, for example a filament yarn, is wound around the sheath 200. The holding helix prevents the supporting tape 200 that has been formed into a sheath from coming apart under restoring forces. After the holding helix 600 has been applied to fix the sheath 200, the cable core is wound up on a storage drum 6100.

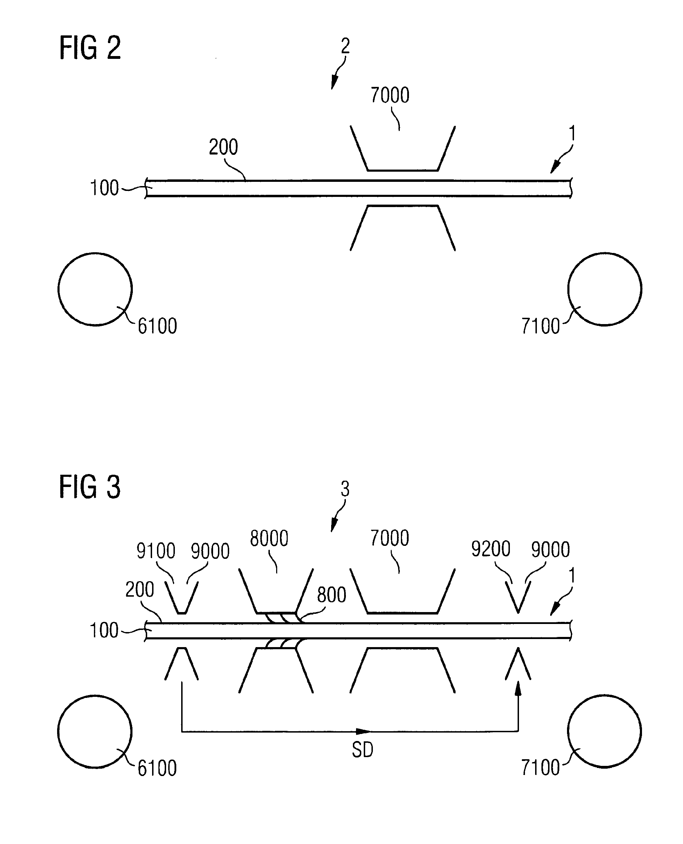

Figure 2 shows an arrangement 2 for producing an optical cable, with which the sheath 200 is surrounded by a cable jacket. The arrangement comprises an extruding device 7000 for extruding the cable jacket around the sheath 200. In the extruding device, a material of the cable jacket, for example a material composed of polyethylene, is heated and extruded around the sheath 200.

Figure 8 shows an embodiment of an optical cable 4, which can be produced with the arrangements for producing optical cable that are shown in Figures 1 and 2. The optical cable has inside the cable core 100 a reinforcing element 20, for example a glass fibre reinforced element, around which the optical transmission elements 10 are arranged in an SZ stranding pattern. Each of the optical transmission elements contains inside it one or more optical waveguides 11, which are surrounded by a thin buffer tube 12. The cable core may be filler-free or contain a filling composition 500, in which the optical transmission elements 10 are embedded. The cable core 100 is surrounded by the sheath 200. The sheath 200 may contain a material composed of a plastic, for example a material composed of polyester.

Figure 8 shows the cross section through an optical cable 4 at a reversal position RP, at which the stranding direction of the optical transmission elements 10 changes from one direction of rotation to an opposite direction of rotation. For example, at the cross-sectional position shown in Figure 8, the stranding changes from an S stranding direction to a Z stranding direction. To identify the reversal position, the marking 300 is applied to the surface 201 of the sheath 200 that is facing the cable core 100 or the optical transmission elements 10. The marking 300 may, for example, be a thin metal platelet, for example an aluminium label, with a layer thickness of between 30 µm and 70 µm, which is adhesively attached on the inner surface of the sheath 200. The marking may have a length such that the standard optical transmission elements 10 are circumferentially surrounded by the marking. Around the sheath 200, consequently also around the marking 300, the cable jacket 700 is extruded with a ripcord 710 for easy removal of the cable jacket. The small layer thickness of the labels makes it possible for no thickenings to occur along the optical cable in the region of the reversal positions and make the marking bend in the cylindrical form of the sheath.

If they take the form of thin metal platelets that are adhesively attached on the inner side 201 of the sheath 200, for example, the markings may be detected by a metal detector through the cable jacket. If the optical cable is already laid in the ground and/or in a non-metallic pipe, is consequently no longer required to remove the cable jacket over a relatively long portion, corresponding to the interval VL between two reversal positions, in order to find a reversal position. Since the markings are placed on the tape 200 synchronously with the switching over of the direction of rotation of the stranding device and, given suitable adaptation of the distances between the stranding device and the sheath forming device on the one hand and between the identification device and the sheath forming device on the other hand, are arranged on the sheath 200 over the reversal positions, each reversal position can be determined by detecting the marking arranged over it on the underside 201 of the sheath through the cable jacket by means of a reader. Consequently, the cable jacket can be removed specifically at the determined position for the splicing of the optical waveguides. A cable sleeve, which is fitted over the opened location after splicing to protect the interior of the cable, can therefore have small dimensions. Since the marking 300 surrounds the cable core over the entire circumference, the reversal position can be detected by the reader from all sides.

As an alternative to markings in the form of aluminium metal platelets, magnetic labels may also be used. The magnetic labels are coated on the underside with a layer of adhesive and are adhesively attached onto the tape 200 under control of the identification device 3000 or of the stranding device when the identification device is activated by the control signal S, which is also used for controlling the switching over of the direction of rotation of the stranding device.
In the case of an optical cable in which the cable core is protected by a cable jacket, labels with magnetic properties can likewise be determined by a reader, for example a negative field detector, through the cable jacket.

A further possibility for identifying a reversal position of the stranding direction is to apply radio transponders, for example RFID transponders, to the tape by means of the identification device 3000. The position of the RFID transponders on the underside of the sheath 200 can likewise be detected through the cable jacket by a reader. Consequently, the reversal points at which the stranding direction of the optical transmission elements changes can be established by a reader through the cable jacket if markings in the form of aluminium labels, magnetic labels or RFID transponders are used.

In the case of the arrangement 2 for producing an optical cable that is shown in Figure 2, an armouring winding device 8000 may optionally be located upstream of the extruding device 7000. Such an arrangement 3 for producing an optical cable is shown in Figure 3. By means of the armouring winding device 8000, an armouring 800 can be arranged over the sheath 200 and the markings 300. Strips of aluminium, strips of steel or thin filaments of glass yarn or aramid, for example, may be arranged around the sheath 200 and the marking 300 as armouring elements. The armouring serves for relieving the cable core of tensile loads that act on the cable.

In the case of an optical cable which comprises an armouring composed of metallic components, markings on the sheath 200 that likewise comprise a metallic material cannot be detected. Therefore, in the case of such a cable it is necessary to provide a marking, for example a coloured identification, on the cable jacket 700. To provide the cable jacket with an identification, the arrangement for producing an optical cable that is shown in Figure 3 comprises an identification device 9000, which comprises a detecting unit 9100 and a printing unit 9200. The detecting unit is arranged upstream of the armouring winding device 8000, in order to determine the marking still more reliably. The detecting unit 9100 may, for example, be formed as a metal detector, which detects the metallic labels 300 attached on the inner side 201 of the sheath 200 as they run past. The detecting unit may also comprise a magnetic detector, which is formed for the purpose of detecting a magnetically acting marking 300 as it runs past. Furthermore, the detecting unit 9100 may include a reader for detecting an RFID transponder. This makes it possible to detect markings in the form of transponders.

In the case of a possible embodiment, the detecting unit 9100 is coupled with the printing unit 9200. If the detecting unit 9100 detects the marking 300 on the sheath 200, the printing unit 9200 is activated by a control signal SD, which is generated by the detecting unit 9100. The printing unit 9200 is formed in such a way that, when the printing unit 9200 is activated with the control signal SD, a coloured identification is applied to the cable jacket 700 by the printing unit 9200.

The distance between the detecting unit 9100 and the printing unit 9200 may, for example, be an integral multiple of the interval between the reversal positions. This ensures that the cable jacket has an identification at every reversal position at which the direction of rotation with which the optical transmission elements are stranded changes. If the distance between the detecting unit 9100 and the printing unit 9200 deviates from a multiple of the interval between the reversal positions, the application of the identification to the cable jacket may take place with a time delay with respect to the activation of the printing unit by the control signal SD. In the case of the arrangement for producing an optical cable that is shown in Figure 3, the provision of the cable jacket with an identification may take place with a deviation in a range from 0 mm to +/- 50 mm with respect to the reversal position.

## Claims

1. Optical cable, comprising:
- a number of stranded optical transmission elements (10), which contain at least one optical waveguide (11),
- wherein the optical transmission elements (10) are arranged in a stranded manner such that the optical transmission elements (10) are stranded in a first direction of rotation (U1) on a first portion (B1) of the cable and are are stranded in a second direction of rotation (U2), which is different from the first direction of rotation, on a second portion (B2) of the cable, arranged adjacent to the first portion, and
- a sheath (200), surrounding the optical transmission elements (10), with a marking (300) arranged on a surface (201) of the sheath to identify a position (SH) between the first portion and the second portion of the cable,
- wherein the marking (300) is designed in such a way that the marking is distinguishable from a region (H1, H2) of the sheath surrounding the marking.

2. Optical cable according to Claim 1,
wherein the sheath (200) surrounds the optical transmission elements (10) in such a way that the marking (300) on the surface (201) of the sheath is arranged between the first portion (B1) and the second portion (B2) of the cable.

3. Optical cable according to Claim 1,
- wherein the optical transmission elements (10) are arranged in a stranded manner such that a change between the first direction of rotation (U1) and the second direction of rotation (U2) takes place at a position (RP) between the first portion (B1) and the second portion (B2) of the cable,
and
- wherein, to identify the position on the surface (201) of the sheath (200), the marking (300) is arranged at the position (SH) of the sheath at which the sheath surrounds the position (RP).

4. Optical cable according to Claim 1,
wherein the marking (300) is arranged circumferentially around the optical transmission elements (10) on the side of the surface (201) of the sheath (200) that is facing the optical transmission elements (10).

5. Optical cable according to Claim 1,
- wherein the marking is formed as a component (300) which is applied on the surface (201) of the sheath by an adhesive connection (310),
- wherein the marking (300) contains aluminium or a magnetic material, or the marking is formed as a transponder.

6. Optical cable according to one of Claim 1,
- wherein the sheath (200) is surrounded by a cable jacket (700), and
- wherein the marking (300) is designed in such a way that the position identified by the marking is detectable through the cable jacket (700).

7. Optical cable according to one of Claims 1 to 6,
- wherein the optical transmission elements (10) are surrounded by a holding element (400),
- wherein the optical transmission elements (10) are arranged in a stranded manner around a central element (20).

8. Arrangement for producing an optical cable according to one of Claims 1 to 7, comprising:
- a stranding device (1000) for stranding the optical transmission elements (10) of the optical cable,
- wherein the stranding device (1000) is formed in such a way that the optical transmission elements (10) are arranged such that they are stranded in a first direction of rotation (U1) on a first portion (B1) of the optical cable and are stranded in a second direction of rotation (U2), which is different from the first direction of rotation, on a second portion (B2) of the optical cable (100), which is arranged adjacent to the first portion,
- wherein a switching over of the stranding device (1000) between the first direction of rotation (U1) and the second direction of rotation (U2) is controlled by a control signal (S),
- an identification device (3000) for applying a marking (300) to a tape (200) to identify a position (SH) between the first portion (B1) and the second portion (B2) of the cable, the application of the marking (300) being controlled by the control signal (S), and
- a sheath forming device (2000) for forming the tape into a sheath (200) around the optical transmission elements (10) of the optical cable in such a way that the marking is arranged between the first portion and the second portion of the cable.

9. Arrangement according to Claim 8,
wherein the stranding device (1000) and the identification device (3000) are respectively arranged at a distance from the sheath forming device (2000), so that the marking (300) is arranged between the first portion (B1) and the second portion (B2) of the optical cable (100) after the sheath (200) has been formed around the cable core (100).

10. Arrangement according to Claim 8,
wherein a transporting speed with which the optical transmission elements (10) are fed to the sheath forming device (2000) from the stranding device (1000), and a transporting speed with which the tape (200) is fed to the sheath forming device (2000) from the identification device (3000) are chosen in such a way that the marking (300) on the surface (201) of the sheath is arranged between the first portion (B1) and the second portion (B2) of the cable.

11. Arrangement according to Claim 8,
- wherein the stranding device (1000) strands the optical transmission elements (10) in such a way that a change between the first direction of rotation (U1) and the second direction of rotation (U2) takes place at a position (RP) between the first portion (B1) and the second portion (B2) of the cable,
- wherein the identification device arranges the marking (300) on the surface (201) of the tape (200) at the position (SH) at which the tape formed into the sheath surrounds the position (RP),
- wherein the marking (300) is adhesively attached on the tape (200) when the identification device (3000) is activated with the control signal (S).

12. A method for producing an optical cable, comprising:
- providing a number of optical transmission elements (10) which contain at least one optical waveguide (11),
- stranding the optical transmission elements (10) along a first portion (B1) of the optical cable in a first direction of rotation (U1), and stranding the optical transmission elements (10) along a second portion (B2) of the optical cable, arranged adjacent to the first portion, in a second direction of rotation (U2), which is different from the first direction of rotation (U1), wherein switching over between the stranding in the first direction of rotation and the second direction of rotation takes place by activating a stranding device (1000) with a control signal (S),
- applying a marking (300) to the surface of a tape (200) by activating an identification device (3000) for arranging the marking (300) with the control signal (S), said marking (300) being designed in such a way that said marking (300) is distinguishable from a region (H1, H2) of the tape surrounding the marking,
- forming said tape (200) into a sheath,
- surrounding the optical transmission elements (10) by the sheath (200) in such a way that the marking (300) is arranged between the first portion (B1) and the second portion (B2) of the optical cable.

13. The method according to Claim 12,
wherein the marking (300) is applied on the tape (200) by adhesively attaching a transponder onto the tape or attaching a material that is different from the material of the tape onto the tape.

14. The method according to Claim 12, comprising:
surrounding the optical transmission elements (10) by the sheath (200) in such a way that the marking (300) is arranged on a surface of the sheath that is facing the optical transmission elements.

15. The method according to any of claims 12 to 14, comprising:
- detecting the marking (300),
- surrounding the sheath (200) with an armouring (800) and a cable jacket (700),
- applying the marking (300) to the cable jacket (700), when the marking has been detected.
